# FASCICULE DE BREVET EUROPEEN

(11) **EP 2 155 525 B1**
(45) Date de publication et mention de la délivrance du brevet: **14.06.2017**
(21) Numéro de dépôt: 08716741.7
(22) Date de dépôt: 24.01.2008
(51) Int. Cl.: B60S 1/40

(54) **BALAI D'ESSUIE-GLACE COMPORTANT UNE VERTEBRE INTERNE REALISANT LE BLOCAGE D'UN ELEMENT DE LIAISON SUR LA MONTURE DE SUPPORT**
WISCHERBLATT MIT EINEM INNEREN WIRBEL ZUM SPERREN EINES VERBINDUNGSGLIEDS DES LAGERGESTELLS
WIPER BRUSH HAVING AN INNER VERTEBRA FOR BLOCKING A CONNECTION MEMBER OF THE BEARING MOUNT

(30) Priorité: 30.01.2007 FR 0700616
(43) Date de publication de la demande: 24.02.2010
(73) Titulaire: Valeo Systèmes d'Essuyage, 78322 Le Mesnil Saint Denis (FR)
(72) Inventeur: CAILLOT, Gérald, F-78720 Cernay La Ville (FR); GRASSO, Giuseppe, F-63340 Le Breuil Sur Couze (FR); BOUSSICOT, Frédéric, 94000 Créteil (FR)
(86) Numéro de dépôt international: PCT/EP2008/050792
(87) Numéro de publication internationale: WO 2008/095782

(56) Documents cités:
- EP-A- 1 627 787
- WO-A-2005/102801
- WO-A2-2007/014395

## Description

L'invention propose un balai d'essuie-glace de véhicule automobile du type "flat-blade" comportant un élément de liaison avec un bras d'entraînement qui est monté sur une monture de support.

Un balai de type Flat-blade présentant une structure dite de première génération est notamment présenté dans le document WO2005/102801.

L'invention propose guant à elle un balai de typa Flat-blade dit de seconde génération. Le document EP 1 627 787 A montre un balai d'essuie glace tel que décrit dans la première partie de la première revendication. L'invention propose plus particulièrement un balai d'essuie-glace de véhicule automobile, comportant :
- une monture de support d'orientation principale longitudinale, qui comporte des moyens inférieurs de support d'une raclette d'essuyage et un corps tubulaire d'axe principal longitudinal ;
- un élément structurel en forme de lame horizontale longitudinale, qui est reçu à l'intérieur du corps tubulaire ; et
- un élément de liaison du balai avec un bras d'entraînement, qui est monté sur la monture de support,

Selon une conception consistant à réaliser des balais d'essuie-glace de faible hauteur, la structure articulée du balai d'essuie-glace, qui porte la raclette ou lame d'essuyage est supprimée, et c'est l'association d'une monture de support creuse avec une vertèbre longitudinale de rigidification qui constitue la structure du balai proprement dit.

La monture de support est en forme de tronçon de profilé longitudinal qui comporte un corps tubulaire supérieur à l'intérieur duquel la vertèbre, qui est en forme de lame horizontale longitudinale est reçue. La monture comporte enfin des crochets inférieurs de montage de la raclette d'essuyage. transversal.

Un tel mode de réalisation de l'élément de liaison en deux parties augmente la complexité du composant et implique une opération supplémentaire d'assemblage des deux parties de l'élément de liaison lors de leur montage sur la monture de support, qui est relativement complexe.

Il a aussi été proposé de réaliser la monture de support en deux parties qui sont jointives au niveau de l'élément de liaison. Ce mode de réalisation augmente ici aussi le nombre de composants du balai, et le mode de solidarisation des deux parties de la monture est relativement complexe.

L'invention a pour but de proposer un balai d'essuie-glace comportant des moyens de solidarisation de l'élément de liaison avec la monture de support relativement simples.

Dans ce but, l'invention propose un balai tel que décrit précédemment, caractérisé en ce que l'élément de liaison est monobloc et comporte au moins deux pattes latérales longitudinales verticales, dont chaque patte s'étend au moins en partie au travers d'une ouverture latérale du corps tubulaire, de manière que les dites au moins deux pattes s'étendent transversalement de part et d'autre de l'élément structurel, et en ce que le bord inférieur de chaque patte est apte à coopérer avec l'élément structurel de manière que l'élément structurel réalise un blocage verticalement de l'élément de liaison sur la monture de support.

Selon d'autres caractéristiques de l'invention, prises isolément ou en combinaison :
- le bord inférieur de chaque patte comporte un crochet recourbé transversalement vers l'intérieur de l'élément de liaison et qui s'étend au dessous de l'élément structurel ;
- l'extrémité inférieure de chaque patte comporte un logement longitudinal formant glissière qui débouche transversalement vers l'intérieur de l'élément de liaison et qui est apte à recevoir en partie l'élément structurel ;
- la longueur longitudinale de chaque ouverture latérale du corps tubulaire est complémentaire de la longueur de la patte de l'élément de liaison qui est reçue dans ladite ouverture latérale, de manière à réaliser un blocage de l'élément de liaison en translation longitudinalement par rapport à la monture de support ;
- l'élément structurel est apte à être monté dans le corps cylindrique postérieurement au montage de l'élément de liaison sur le corps tubulaire de la monture de support ;
- l'élément de liaison comporte des moyens pour le blocage de l'élément structurel en position dans le corps tubulaire ;
- au moins une patte comporte un ergot faisant saillie transversalement vers l'intérieur de l'élément de liaison, ledit ergot étant apte à être reçu dans une encoche de l'élément structurel lorsque l'élément structurel est en position dans le corps tubulaire ;
- la monture de support comporte des moyens blocage longitudinal de l'élément structurel en position dans le corps tubulaire ;
- une extrémité longitudinale du corps cylindrique est obturée et l'autre extrémité longitudinale du corps cylindrique est débouchante pour permettre l'introduction de l'élément structurel dans le corps cylindrique, et ladite autre extrémité longitudinale est apte à être déformée de manière permanente pour réaliser un blocage de l'élément structurel à l'intérieur du corps tubulaire par sertissage.

D'autres caractéristiques et avantages de l'invention apparaîtront à la lecture de la description détaillée qui suit pour la compréhension de laquelle on se reportera aux figures annexées parmi lesquelles :
- la figure 1 est une représentation schématique en perspective d'un balai d'essuyage selon l'invention ;
- la figure 2 est une représentation schématique en perspective éclatée du balai représenté à la figure 1, montrant les ouvertures latérales du corps de l'armature ;
- la figure 3 est une perspective en détail de dessous de l'élément de liaison représenté aux figures 1 et 2, montrant les extrémités inférieures des pattes latérales ;
- la figure 4A est une vue en coupe du balai représenté à la figure 1, avant le montage de l'élément de liaison sur la monture de support ;
- la figure 4B est une vue similaire à celle de la figure 4A, dans laquelle l'élément de liaison et l'élément structurel sont montés sur l'armature de support ;
- la figure 5 est une vue similaire à celle de la figure 3, montrant un élément de liaison et un élément structurel conformes à une variante de réalisation de l'invention.

Pour la description de l'invention, on adoptera à titre non limitatif les orientations verticale, longitudinale et transversale selon le repère V, L, T indiqué aux figures.

Dans la description qui va suivre, des éléments identiques, similaires ou analogues seront désignés par les mêmes chiffres de référence.

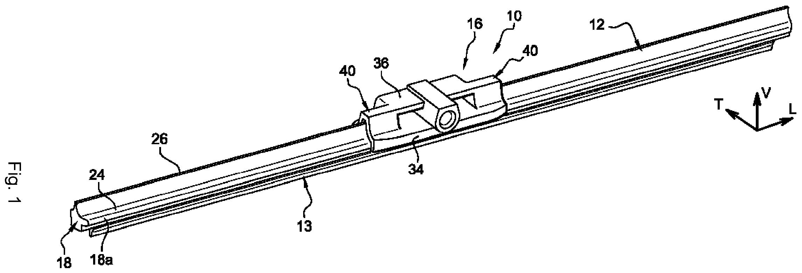

On a représenté à la figure 1 un balai d'essuie-glace 10 de type "flat-blade", qui comporte une monture de support 12 d'orientation principale longitudinale, qui porte les autres composants du balai 10, une vertèbre interne 14 en forme de lame horizontale longitudinale, un élément de liaison monobloc 16 permettant de relier le balai d'essuie-glace 10 à un bras d'entraînement (non représenté) et une lame inférieure d'essuyage 13.

La monture 12 comporte un corps central 18 tubulaire d'axe principal longitudinal, qui est délimité par une paroi supérieure horizontale 20, une paroi inférieure horizontale 22, et par deux parois latérales longitudinales verticales 24.

La monture 12 comporte aussi une nervure supérieure longitudinale 26, qui s'étend verticalement vers le haut depuis la face supérieure de la paroi supérieure horizontale 20 du corps 18, et qui est conformée aérodynamiquement de manière à générer des efforts d'appui du balai 10 sur la surface vitrée, sous l'action du vent relatif produit par le déplacement du véhicule.

Enfin, la monture de support 12 comporte des moyens inférieurs de montage de la raclette 13 d'essuyage, qui consiste ici en deux crochets inférieurs longitudinaux 28 en vis-à-vis, et qui délimitent un logement tubulaire 30 ouvert vers le bas, dans lequel un dos supérieur complémentaire de la raclette 13 est monté.

La vertèbre 14 constitue l'élément structurel du balai 10, qui rigidifie la monture 12. La vertèbre 14 est réalisée en un matériau relativement rigide, par exemple en acier, et elle consiste en une lame horizontale longitudinale qui est agencée à l'intérieur du corps tubulaire 18.

L'élément de liaison 16 est monté longitudinalement globalement au milieu de la monture 12, et il s'étend au-dessus de la paroi supérieure horizontale 20.

La nervure supérieure 26 comporte une ouverture 32 au travers de laquelle l'élément de liaison 16 est monté sur la monture 12.

L'élément de liaison 16 comporte une embase supérieure 36 qui est en appui sur la face supérieure de la paroi supérieure horizontale 20 du corps 18 et qui comporte des moyens pour la liaison du balai 10 à un bras d'entraînement.

L'élément de liaison 16 comporte aussi deux pattes latérales inférieures 34, chacune s'étendant vers le bas depuis l'embase supérieure 36.

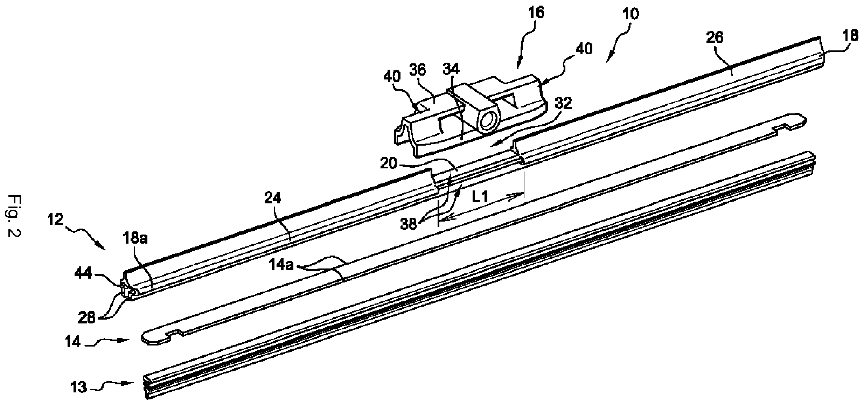

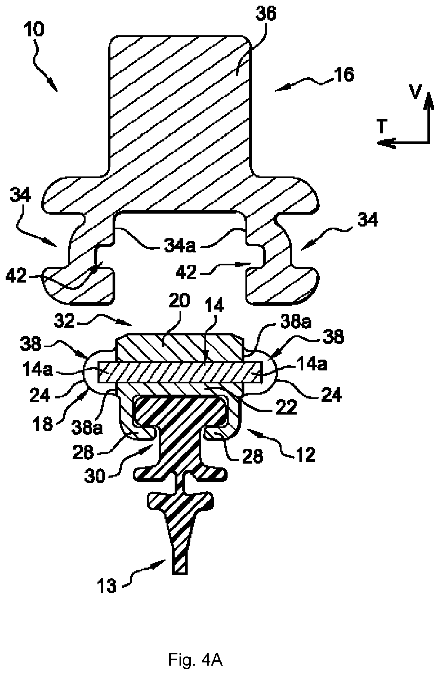

Conformément à l'invention, le corps 18 comporte des ouvertures latérales 38 dans lesquelles les pattes latérales 34 de l'élément de liaison 16 sont reçues. Comme on peut le voir aux figures 2 et 4A, les ouvertures 38 sont réalisées dans les parois latérales 24 et en partie dans les parois supérieure 20 et inférieure 22 du corps 18.

Cela permet une mise en position de l'élément de liaison 16 sur le corps 18 selon un mouvement de coulissement vertical du haut vers le bas.

Les ouvertures 38 sont en outre réalisées de manière à réaliser le positionnement horizontal de l'élément de liaison 16 par rapport au corps 18 de la monture 12.

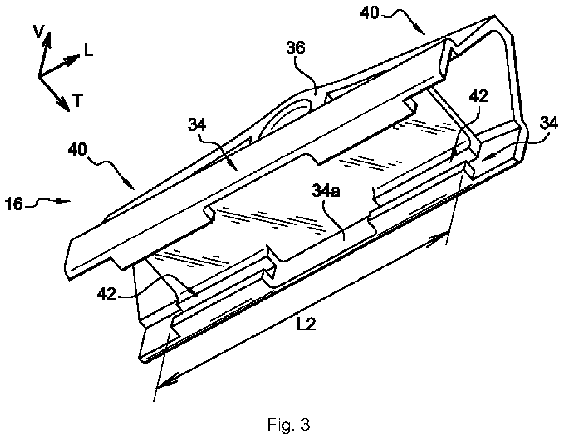

Pour cela, selon un premier aspect des ouvertures 38, la longueur longitudinale "L1" (figure 2) de chaque ouverture 38 est égale à la longueur longitudinale "L2" (figure 3) de la patte latérale 34 qui est reçue dans l'ouverture 38. Cela permet ainsi de réaliser un blocage longitudinal de l'élément de liaison 16 sur le corps 18 de la monture 12.

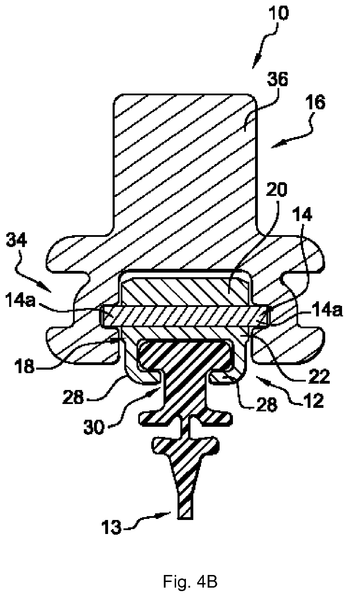

De plus, comme on peut le voir aux figures 4A et 4B, les ouvertures 38 sont réalisées de manière que la distance transversale entre le fond 38a longitudinal vertical de chaque ouverture est globalement égale à la distance transversale entre les faces longitudinales verticales internes 34a en vis-à-vis des deux pattes 34. Cela permet ainsi de réaliser un positionnement et un blocage transversal de l'élément de liaison 16 sur le corps 18 de la monture 12.

L'élément de liaison comporte en outre, comme on peut le voir aux figures 1 à 3 des portions d'extrémité 40 qui s'étendent longitudinalement de part et d'autre de l'embase supérieure 36 et qui sont réalisées de manière à recouvrir en partie la nervure supérieure 26 et le corps 18 de la monture 12.

Ces portions d'extrémité 40 permettent notamment d'améliorer l'aspect esthétique général du balai 10.

Conformément à un autre aspect de l'invention, le verrouillage en position de l'élément de liaison 16 sur la monture de support 12 est réalisé par l'intermédiaire de la vertèbre 14 qui coopère avec les pattes latérales 36 de l'élément de liaison.

La vertèbre 14 réalise ainsi un verrouillage vertical de l'élément de liaison 16 sur la monture de support 12.

Cette fonction de verrouillage par l'intermédiaire de la vertèbre 14 est rendue possible par la présence des ouvertures 38, de manière que la vertèbre 14 fait saillie transversalement par rapport au fond 38a de chaque ouverture 38.

Pour coopérer avec la vertèbre 14, comme on peut le voir aux figures 3, 4A et 4B, l'extrémité inférieure de chaque patte 34 comporte un logement 42 d'orientation principale longitudinale, qui débouche transversalement vers l'intérieur de l'élément de liaison 16, c'est-à-dire dans la face interne 34a de la patte 34.

Le logement 42 de chaque patte 34 est ainsi apte à recevoir un bord latéral 14a de la vertèbre 14 lorsque l'élément de liaison 16 et la vertèbre 14 sont montés sur la monture de support 12, comme on peut le voir à la figure 4B.

Selon une variante de réalisation non représentée des pattes 34, l'extrémité inférieure de chaque patte 34 forme un crochet recourbé transversalement vers l'intérieur de l'élément de liaison, en direction de l'autre patte 34.

Ce crochet est apte à être reçu sous la vertèbre 14, de manière que la vertèbre 14 forme une butée de l'élément de liaison 16 uniquement en déplacement vers le haut, l'élément de liaison 16 étant en butée vers le bas contre la paroi supérieure 20 du corps 18.

Comme on l'a dit plus haut, l'élément de liaison 16 est monté sur la monture de support 12 selon un coulissement vers le bas. De plus, la vertèbre 14 est montée dans le corps 18 de la monture de support 12 selon un coulissement longitudinal au travers du corps 18, la vertèbre étant introduite au niveau d'une extrémité longitudinale du corps 18, ici l'extrémité de gauche en se reportant à la figure 2, qui est débouchante à cet effet.

Ainsi, lors de l'assemblage des composants du balai 10 sur la monture 12, l'élément de liaison 16 est monté sur la monture 12 avant que la vertèbre 14 soit introduite dans le corps 18.

La vertèbre 14 forme ainsi une goupille de verrouillage de l'élément de liaison 16 en position sur le corps 18.

Comme on l'a dit plus haut, la vertèbre 14 est en forme d'une lame longitudinale, qui est reçue dans le corps 18 cylindrique.

Selon un autre aspect du balai 10 selon l'invention, le balai 10 comporte des moyens pour le verrouillage de la vertèbre 14 en position dans le corps cylindrique 18.

Selon le mode de réalisation représenté aux figures 1 à 3, le corps 18 de la monture 12 est réalisé de manière qu'il est débouchant au niveau d'une seule de ses extrémités longitudinales, ici l'extrémité longitudinale de gauche 18a, comme on peut le voir à la figure 2. L'autre extrémité 18b du corps 18 est par conséquent obturée.

Comme on l'a dit plus haut, la vertèbre 14 est introduite dans le corps 18 au travers de l'ouverture 44, postérieurement au montage de l'élément de liaison 16.

Ensuite, lorsque la vertèbre 14 est en position dans le corps 18, c'est-à-dire notamment qu'elle est en butée longitudinalement contre l'extrémité de droite 18b du corps qui est obturée, l'extrémité de gauche 18a du corps 18 est obturée à son tour.

L'obturation du corps 18 est par exemple réalisée par déformation permanente de son extrémité de gauche 18a, on parle alors de sertissage de la vertèbre 14 dans le corps 18.

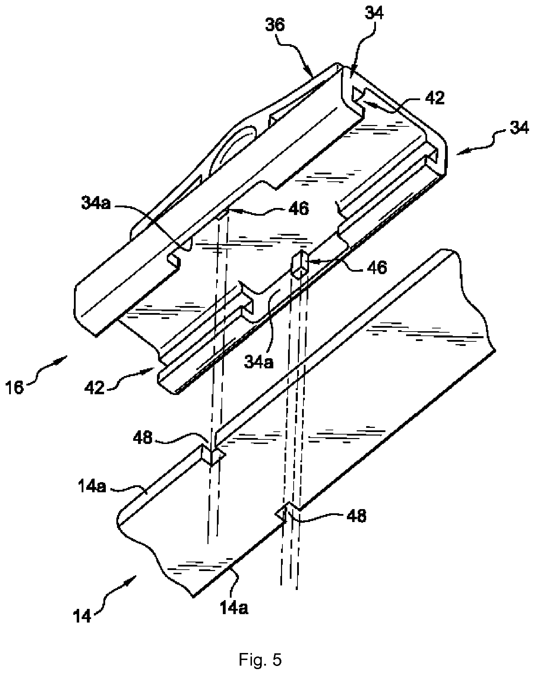

Selon une variante de réalisation des moyens de blocage longitudinal de la vertèbre 14, et comme on peut le voir à la figure 5, chaque patte 34 de l'élément de liaison 16 comporte un ergot interne 46 qui fait saillie transversalement par rapport à la face interne 34a de la patte 34, c'est-à-dire qu'il s'étend transversalement en direction de l'autre patte 34 en vis-à-vis.

Aussi, chaque ergot interne 46 est agencé verticalement sur la patte 34 de manière que lorsque l'élément de liaison 16 est monté sur la monture 18, il s'étend au moins en partie à l'intérieur du logement délimité par le corps cylindrique 18.

Les ergots internes 46 sont ainsi aptes à coopérer avec la vertèbre 14, pour réaliser le verrouillage de la vertèbre 14 en position dans le corps cylindrique 18.

A cet effet, la vertèbre 14 comporte des encoches 48 qui sont réalisées dans les bords latéraux 14a de la vertèbre et dont chaque encoche 48 est apte à recevoir un ergot 46 de l'élément de liaison 16.

Selon un mode de réalisation préféré, les ergots 46 sont déformables élastiquement, de manière à se déformer lors de l'introduction de la vertèbre 14 dans le corps 18, et à reprendre leur forme initiale lorsque la vertèbre est en position dans le corps 18.

## Revendications

1. Balai (10) d'essuie-glace de véhicule automobile, comportant
- une monture (12) de support d'orientation principale longitudinale, qui comporte des moyens inférieurs de support d'une raclette (13) d'essuyage et un corps tubulaire (18) d'axe principal longitudinal ;
- un élément structurel (14) en forme de lame horizontale longitudinale, qui est reçu à l'intérieur du corps tubulaire (18) ; et
- un élément de liaison (16) du balai (10) avec un bras d'entraînement, qui est monté sur la monture (12) de support, et qui est monobloc, **caractérisé en ce qu'**il comporte au moins deux pattes (34) latérales longitudinales verticales, dont chaque patte (34) s'étend au moins en partie au travers d'une ouverture (38) latérale du corps tubulaire (18), de manière que les dites au moins deux pattes (34) s'étendent transversalement de part et d'autre de l'élément structurel (14) après insertion de celui-ci dans le corps tubulaire (18), et **en ce que** le bord inférieur de chaque patte (34) est apte à coopérer avec l'élément structurel (14) de manière que l'élément structurel (14) réalise un blocage verticalement de l'élément de liaison (16) sur la monture (12) de support.

2. Balai (10) selon la revendication précédente, **caractérisé en ce que** l'extrémité inférieure de chaque patte (34) comporte un crochet recourbé transversalement vers l'intérieur de l'élément de liaison (16) et qui s'étend au dessous de l'élément structurel (14).

3. Balai (10) selon la revendication 1, **caractérisé en ce que** le bord inférieur de chaque patte (34) comporte un logement longitudinal (42) formant glissière qui débouche transversalement vers l'intérieur de l'élément de liaison (16) et qui est apte à recevoir en partie l'élément structurel (14).

4. Balai (10) selon l'une quelconque des revendications précédentes, **caractérisé en ce que** la longueur longitudinale (L1) de chaque ouverture (38) latérale du corps tubulaire (18) est complémentaire de la longueur (L2) de la patte (34) de l'élément de liaison (16) qui est reçue dans ladite ouverture (38) latérale, de manière à réaliser un blocage de l'élément de liaison (16) en translation longitudinalement par rapport à la monture (12) de support.

5. Balai (10) selon l'une quelconque des revendications précédentes, **caractérisé en ce que** l'élément structurel (14) est apte à être monté dans le corps (18) cylindrique postérieurement au montage de l'élément de liaison (16) sur le corps tubulaire (18) de la monture (12) de support.

6. Balai (10) selon l'une quelconque des revendications précédentes, **caractérisé en ce que** l'élément de liaison (16) comporte des moyens pour le blocage de l'élément structurel (14) en position dans le corps tubulaire (18).

7. Balai (10) selon la revendication précédente, **caractérisé en ce que** au moins une patte (34) comporte un ergot (46) faisant saillie transversalement vers l'intérieur de l'élément de liaison (16), ledit ergot étant apte à être reçu dans une encoche (48) de l'élément structurel (14) lorsque l'élément structurel (14) est en position dans le corps tubulaire (18).

8. Balai (10) selon la revendication 5, **caractérisé en ce que** la monture (12) de support comporte des moyens de blocage longitudinal de l'élément structurel (14) en position dans le corps tubulaire (18).

9. Balai (10) selon la revendication précédente, **caractérisé en ce que** une extrémité longitudinale (18b) du corps (18) cylindrique est obturée et l'autre extrémité longitudinale (18a) du corps (18) cylindrique est débouchante pour permettre l'introduction de l'élément structurel (14) dans le corps (18) cylindrique, et **en ce que** ladite autre extrémité longitudinale (18a) est apte à être déformée de manière permanente pour réaliser un blocage de l'élément structurel (14) à l'intérieur du corps tubulaire (18) par sertissage.

## Patentansprüche

1. Wischerblatt (10) für Kraftfahrzeug, aufweisend
- einen Halter (12) mit Hauptausrichtung in Längsrichtung, der untere Haltemittel für einen Wischgummi (13) und einen röhrenförmigen Körper (18) mit einer Hauptachse in Längsrichtung aufweist;
- ein Strukturelement (14) in Form einer waagerechten, längs verlaufenden Leiste, das im Inneren des röhrenförmigen Körpers (18) aufgenommen ist; und
- ein Verbindungselement (16) zum Verbinden des Blatts (10) mit einem Antriebsarm, das an dem Halter (12) montiert und aus einem Stück ist, **dadurch gekennzeichnet, dass** es mindestens zwei senkrechte seitliche, längs verlaufende Klauen (34) aufweist, wobei jede Klaue (34) zumindest teilweise derart durch eine seitliche Öffnung (38) des röhrenförmigen Körpers (18) verläuft, dass die mindestens zwei Klauen (34) quer auf beiden Seiten des Strukturelements (14) verlaufen, nachdem es in den röhrenförmigen Körper (18) gesteckt wurde, und dadurch, dass der untere Rand jeder Klaue (34) derart mit dem Strukturelement (14) zusammenwirken kann, dass das Strukturelement (14) das Verbindungselement (16) senkrecht auf dem Halter (12) feststellt.

2. Blatt (10) nach dem vorhergehenden Anspruch, **dadurch gekennzeichnet, dass** das untere Ende jeder Klaue (34) einen quer ins Innere des Verbindungselements (16) gekrümmten Haken aufweist, der unter dem Strukturelement (14) verläuft.

3. Blatt (10) nach Anspruch 1, **dadurch gekennzeichnet, dass** der untere Rand jeder Klaue (34) eine Längsaufnahme (42) aufweist, die eine Gleitführung bildet, die quer ins Innere des Verbindungselements (16) mündet und die in der Lage ist, das Strukturelement (14) teilweise aufzunehmen.

4. Blatt (10) nach einem der vorhergehenden Ansprüche, **dadurch gekennzeichnet, dass** die Länge in Längsrichtung (L1) jeder seitlichen Öffnung (38) des röhrenförmigen Körpers (18) die Länge (L2) der Klaue (34) des Verbindungselements (16) ergänzt, die in der seitlichen Öffnung (38) aufgenommen ist, damit eine Feststellung des Verbindungselements (16) in einer Translationsbewegung längs bezogen auf den Halter (12) erreicht wird.

5. Blatt (10) nach einem der vorhergehenden Ansprüche, **dadurch gekennzeichnet, dass** das Strukturelement (14) nach der Befestigung des Verbindungselements (16) am röhrenförmigen Körper (18) des Halters (12) im zylindrischen Körper (18) befestigbar ist.

6. Blatt (10) nach einem der vorhergehenden Ansprüche, **dadurch gekennzeichnet, dass** das Verbindungselement (16) Mittel zum Arretieren des Strukturelements (14) im röhrenförmigen Körper (18) aufweist.

7. Blatt (10) nach dem vorhergehenden Anspruch, **dadurch gekennzeichnet, dass** mindestens eine Klaue (34) einen Ansatz (46) aufweist, der quer ins Innere des Verbindungselements (16) vorspringt, wobei der Ansatz in einer Aussparung (48) des Strukturelements (14) aufnehmbar ist, wenn sich das Strukturelement (14) an seiner Position in dem röhrenförmigen Körper (18) befindet.

8. Blatt (10) nach Anspruch 5, **dadurch gekennzeichnet, dass** der Halter (12) Mittel zum Arretieren des Strukturelements (14) in Längsrichtung im röhrenförmigen Körper (18) aufweist.

9. Blatt (10) nach dem vorhergehenden Anspruch, **dadurch gekennzeichnet, dass** ein Längsende (18b) des zylindrischen Körpers (18) verschlossen ist und das andere Längsende (18a) des zylindrischen Körpers (18) offen ist, damit das Einführen des Strukturelements (14) in den zylindrischen Körpers (18) ermöglicht wird, und dadurch, dass das andere Längsende (18a) in der Lage ist, dauerhaft verformt zu werden, damit das Strukturelement (14) im Inneren des röhrenförmigen Körpers (18) durch Einfassen festgestellt wird.

## Claims

1. A wiper brush (10) for an automotive vehicle, comprising
- a bearing mount (12) having a longitudinal main orientation which includes lower means for holding a wiping blade (13) and a tubular body (18) having a longitudinal main axis;
- a structural member (14) in the form of a longitudinal horizontal blade received inside the tubular body (18); and
- a connection member (16) of the brush (10) with a driving arm which is mounted on the bearing mount (12) and which is made of a single piece, **characterised in that** it includes at least two side longitudinal vertical tabs (34) each of which tabs (34) extends through a side opening (38) of the tubular body (18) so that said at least two tabs (34) extend transversally on either side on the structural member (14) after the insertion thereof in the tubular body (18) and **in that** the lower edge of each tab (34) is capable of interaction with the structural member (14) so that the structural member (14) vertically blocks the connection member (16) on the bearing mount (12).

2. A wiper brush (10) according to the preceding claim, **characterised in that** the lower end of each tab (34) includes a hook transversally bent towards the inside of the connection member (16) and which extends below the structural member (14).

3. A wiper brush (10) according to claim 1, **characterised in that** the lower edge of each tab (34) includes a longitudinal recess (42) forming a slide which transversally opens into the inside of the connection member (16) and which is capable of partially receiving the structural member (14).

4. A wiper brush (10) according to any one of the preceding claims, **characterised in that** the longitudinal length (L1) of each side opening (38) of the tubular body (18) matches the length (L2) of the tab (34) of the connection member (16) which length of tab is received in said side opening (38) so as to block the connection member (16) longitudinally in translation with respect to the bearing mount (12).

5. A wiper brush (10) according to any one of the preceding claims, **characterised in that** the structural member (14) is capable of being mounted in the cylindrical body (18) after the mounting of the connection member (16) on the tubular body (18) of the bearing mount (12).

6. A wiper brush (10) according to any one of the preceding claims, **characterised in that** the connection member (16) includes means for blocking the structural member (14) in position in the tubular body (18).

7. A wiper brush (10) according to the preceding claim, **characterised in that** at least one tab (34) includes a pin (46) transversally protruding towards the inside of the connection member (16), said pin being capable of being received in a slot (48) of the structural member (14) when said structural member (14) is in position in the tubular body (18).

8. A wiper brush (10) according to claim 5, **characterised in that** the bearing mount (12) includes means for longitudinally blocking the structural member (14) in position in the tubular body (18).

9. A wiper brush (10) according to the preceding claim, **characterised in that** the longitudinal end (18b) of the cylindrical body (18) is blocked and the other longitudinal end (18a) of the cylindrical body (18) is opened for enabling the introduction of the structural member (14) into the cylindrical body (18) and **in that** the other longitudinal end (18a) is capable of being permanently deformed to obtain the blocking of the structural element (14) inside the tubular body (18) by crimping.
